# EUROPÄISCHE PATENTSCHRIFT

(11) **EP 2 899 855 B1**
(45) Veröffentlichungstag und Bekanntmachung des Hinweises auf die Patenterteilung: **24.08.2022**
(21) Anmeldenummer: 14152277.1
(22) Anmeldetag: 23.01.2014
(51) Int. Cl.: H02K 5/128

(54) **Elektrische Kraftfahrzeug-Kühlmittelpumpe**
Electrically operated motor vehicle coolant pump
Pompe de liquide de refroidissement électrique pour véhicule automobile

(43) Veröffentlichungstag der Anmeldung: 29.07.2015
(73) Patentinhaber: Pierburg Pump Technology GmbH, 41460 Neuss (DE)
(72) Erfinder: Popov, Dr. Vladimir, 78048 Villingen-Schwenningen (DE); Waberski, Maik, 16845 Neustadt (DE); Rathke, Ronald, 04720 Döbeln (DE); Teubel, Jens, 04746 Hartha (DE)
(74) Vertreter: terpatent Patentanwälte ter Smitten Eberlein-Van Hoof Rütten Daubert

(56) Entgegenhaltungen:
- EP-A1- 1 635 065
- EP-A2- 0 530 786
- DE-A1- 2 528 808
- DE-B3-102011 079 224
- JP-A- 2006 257 912
- US-A1- 2010 288 316

## Beschreibung

Die Erfindung bezieht sich auf eine elektrische Kraftfahrzeug-Kühlmittelpumpe mit einem Pumpenrotor, der durch einen elektrischen Antriebsmotor angetrieben wird, der als sogenannter Spaltrohr-Motor ausgebildet ist.

Mechanisch angetriebene Kraftfahrzeug-Kühlmittelpumpen sind mechanisch mit dem Verbrennungsmotor gekoppelt, und werden daher nicht bedarfsgerecht angetrieben. Eine elektrische Kraftfahrzeug-Kühlmittelpumpe dagegen kann exakt bedarfsgerecht betrieben werden, und fördert insbesondere auch dann Kühlmittel, wenn das Kraftfahrzeug zwar in Betrieb ist, der Verbrennungsmotor jedoch temporär abgeschaltet ist. Zur Vermeidung von Wellendichtungen, die stets eine Leckagequelle sein können, werden als Antriebsmotoren für elektrische Kühlmittelpumpen sogenannte Spaltrohr-Antriebsmotoren verwendet, bei denen ein zylindrisches Spaltrohr den trockenen Motorstator, der von den Motorspulen gebildet wird, flüssigkeitsdicht trennt von dem nassen Motorrotor, der in dem Kühlmedium angeordnet ist. Wegen ihrer preiswerten Herstellbarkeit und ihrer neutralen magnetischen Eigenschaften werden in der Praxis praktisch ausschließlich Kunststoff-Spaltrohre eingesetzt.

Allerdings hat die Praxis gezeigt, dass eine Diffusion von Wasser bzw. Wasserdampf durch ein Kunststoff-Spaltrohr hindurch ohne erheblichen Aufwand nicht völlig zu vermeiden ist. Zwar können die Motorspulen durch geeignete Maßnahmen, beispielsweise durch Vergießen, ausreichend geschützt werden gegenüber Feuchtigkeit, die durch das Spaltrohr hindurch diffundiert, jedoch kann je nach Konstruktion nicht verhindert werden, dass die Feuchtigkeit zur Motorelektronik gelangt, die aus der Kommutierungsmimik und Leistungshalbleitern besteht.

Es wird in DE 20 2011 051 526 U1, DE 10 2010 011 316 A1 und DE 200 07 099 U1 daher vorgeschlagen, für das Spaltrohr ein unmagnetisches Metallblech oder Edelstahl zu verwenden. Allerdings sind diese allgemeinen Vorschläge nicht in die Praxis umgesetzt worden, da die Forderung nach einem korrosionsfesten Edelstahl, der ferner günstige magnetische und elektrische Eigenschaften aufweist, ein Paradoxon zu sein schien. Hinzu kam, dass eine derartige Lösung nicht preiswert erhältlich war.

Aus EP 0530786 A2 ist eine elektrische Flüssigkeitspumpe bekannt, die einen Spalttopf mit einer geringen Wandstärke aufweist. Aus DE 25288080 A1 ist ein Spalttopf bekannt, der bestimmte chemische und mechanische Merkmale aufweist.

Die Druckschrift US 2010/0288316 A1 offenbart eine elektrische Flüssigkeitspumpe mit einem Spalttopfkörper, der ein Lager hält, durch das die Motorwelle drehbar gelagert ist.

DE 102011079224 B3 und EP 1635065 A1 offenbaren jeweils elektrische Flüssigkeitspumpen, bei denen ein Lagerdorn aus Vollmaterial separat ausgebildet ist von dem Spalttopfkörper.

Aus JP 2006 257912 A ist eine elektrische Kraftfahrzeug-Kühlmittelpumpe bekannt, wobei der innen liegende Rotor auf einem feststehenden Lagerdorn gelagert ist, der von dem Spalttopfkörper gehalten wird.

Aufgabe der Erfindung vor diesem Hintergrund ist es, eine elektrische Kraftfahrzeug-Kühlmittelpumpe mit einem preiswerten und elektrisch effizienten Spaltrohr-Antriebsmotor mit absoluter fluidischer Undurchlässigkeit zu schaffen.

Diese Aufgabe wird erfindungsgemäß mit einer elektrischen Kraftfahrzeug-Kühlmittelpumpe mit den Merkmalen des Anspruchs 1 geschaffen.

Die erfindungsgemäße elektrische Kraftfahrzeug-Kühlmittelpumpe weist einen Pumpenrotor zum Pumpen des Kühlmittels auf, der bevorzugt als Flügelrad bzw. als sogenannter Impeller ausgebildet sein kann. Der Pumpenrotor wird durch einen elektrischen Antriebsmotor angetrieben. Der elektrische Antriebsmotor weist mehrere Motorspulen auf, die gemeinsam den Motorstator bilden, der im trockenen Bereich des Antriebsmotors angeordnet ist. Der Motorrotor ist im nassen Bereich angeordnet und ist bevorzugt permanentmagnetisch erregt. Zur Steuerung der Motorspulen ist eine elektronische Kommutierung vorgesehen. Der Motorstator und der Motorrotor sind flüssigkeitsdicht durch ein Spaltrohr voneinander getrennt.

Das Spaltrohr wird von einem Metallblechkörper gebildet, der in dem Spaltbereich zwischen dem Motorrotor und dem Motorstator eine Materialstärke d < 0,5 mm aufweist. Durch Verwendung eines Metalls für das Spaltrohr ist eine absolute Undurchlässigkeit in Bezug auf Feuchtigkeit sichergestellt und kann die Materialstärke des Spaltrohrs gering gehalten werden, wodurch der verlustbehaftete Spalt zwischen dem Motorrotor und dem Motorstator ebenfalls klein gehalten werden kann. Hierdurch wird die elektrische Effektivität des Antriebsmotors verbessert.

Der das Spaltrohr bildende Metallblechkörper besteht aus einem austenitischen Edelstahl. Ein austenitischer Edelstahl ist nicht ferromagnetisch. Die relative magnetische Permeabilität µr ist geringer als 20, und ist besonders bevorzugt geringer als 1,5. Durch die Verwendung eines austenitischen Edelstahls wird sichergestellt, dass die magnetischen Verluste in dem Spalt zwischen dem Motorrotor und dem Motorstator gering sind.

Das Metall des Metallblechkörpers weist ferner einen spezifischen elektrischen Widerstand p auf, der größer als 0,10 Ω × mm/m ist. Hierdurch werden die Wirbelstrom-Verluste, die durch den rotierenden Motorrotor in dem Metall-Spaltrohr induziert werden, gering gehalten,

Die Härte HV des Spaltrohr-Metallblechkörpers liegt zwischen 200 und 500. Der Metallblechkörper ist so weich und formbar, dass er durch Kaltumformung in die gewünschte komplexe Form gebracht werden kann. Auf diese Weise wird eine relativ preiswerte Herstellung eines Edelmetall-Spaltrohrs erst ermöglicht. Dennoch sind die Materialkosten und die Formungskosten im Vergleich zu einem Kunststoff-Spaltrohr relativ hoch.

Es ist daher vorgesehen, dass der einstückige Metallblechkörper ferner eine Gleitlagerschale eines Gleitlagers für die radiale Lagerung des Motorrotors bildet. Der einstückige Metallblechkörper kann aufgrund der vorgenommenen Materialauswahl daher sowohl das Spaltrohr als auch eine Gleitlagerschale des Motorrotor-Gleitlagers bilden. Hierdurch werden die Mehrkosten gegenüber einem Kunststoff-Spaltrohr teilweise wieder aufgewogen.

Gemäß einer bevorzugten Ausführungsform wird mit einem einzigen Tiefzieh-Arbeitsgang sowohl das Spaltrohr als auch die Gleitlagerschale aus dem Metallblechkörper hergestellt.

Vorzugsweise ist die Rauheit Rz des Metallblechkörpers im Bereich der Gleitlagerschale kleiner als 3,6µm. Die Gleitlagerschale muss eine relativ hohe Glattheit aufweisen, um auch langfristig eine geringe Lagerreibung sicherzustellen. Durch die geringe Lagerreibung wird zum Einen kein oder ein nur geringer Materialabtrag und zum Anderen eine geringe Wärmeerzeugung sichergestellt. Besonders bevorzugt besteht die korrespondierende Gleitlagerschale des Motorrotors aus Kohlenstoff. Die Gleitlager-Materialpaarung bestehend aus einem austenitischen Edelstahl mit geringer Rauiheit einerseits und Kohlenstoff andererseits führt zu einem selbstschmierenden Gleitlager, das geringe Reibung und hohe Standfestigkeit aufweist.

Gemäß einer bevorzugten Ausgestaltung weist der topfförmige Metallblechkörper mittig auf dem in einer Querebene stehenden Topfboden eine Ringstufe auf, die besonders bevorzugt als Axial-Lagerring eines Axialgleitlagers ausgebildet ist. Durch die zusätzliche ringförmige Stufe, die den Topfboden axial in Richtung des Motorrotors ausstülpt, wird die Stabilität der durch den Metallblechkörper gebildeten Radial-Gleitlagerschale gegenüber Kippmomenten erheblich verbessert. Ferner kann durch die in der Querebene stehende Ringscheibe der Ringstufe eine Seite eines einseitigen Axiallagers für den Motorrotor gebildet werden.

Vorzugsweise ist der Antriebsmotor als Innenläufer ausgebildet, so dass der Motorstator radial außerhalb des Motorrotors angeordnet ist. Besonders bevorzugt ist die Radial-Gleitlagerschale des Metallblechkörpers hohlzylindrisch ausgebildet, wobei der Hohlzylinder durch ein zylindrisches Wärmeleitelement aufgefüllt ist, das bevorzugt metallisch ist und das besonders bevorzugt aus Kupfer besteht. Durch den dünnwandigen Metallblechkörper im Bereich der Radial-Gleitlagerschale kann die Reibungswärme des Radial-Gleitlagers nur schlecht verteilt bzw. abgeführt werden. Durch das Einbringen eines Wärmeleitelements, das unmittelbar an der Innenwand des die Gleitlagerschale bildenden Metallblechkörpers über den gesamten Umfang und die gesamte Länge anliegt, wird zum Einen in dem Gleitlager ein Wärmespeicher geschaffen, der Wärmespitzen zwischenspeichern kann, und wird zum Anderen der Materialquerschnitt für die Wärmeabfuhr erheblich vergrößert, so dass auch die Kühlung des Gleitlagers hierdurch verbessert wird. Durch die verbesserte Kühlung des Gleitlagers wiederum verringert sich der Lagerabrieb, der stark temperaturabhängig ist, so dass wiederum Einsparungen an der Lagerqualität ermöglicht werden.

Im Folgenden wird ein Ausführungsbeispiel der Erfindung näher erläutert. Es zeigen:
Figur 1 einen Längsschnitt einer elektrischen Kraftfahrzeug-Kühlmittelpumpe mit einem Spaltrohr-Antriebsmotor mit einem aus einem Metallblechkörper bestehenden Spaltrohr, und
Figur 2 einen vergrößerten Längsschnitt des Spaltrohrs der Kühlmittelpumpe der Figur 1.

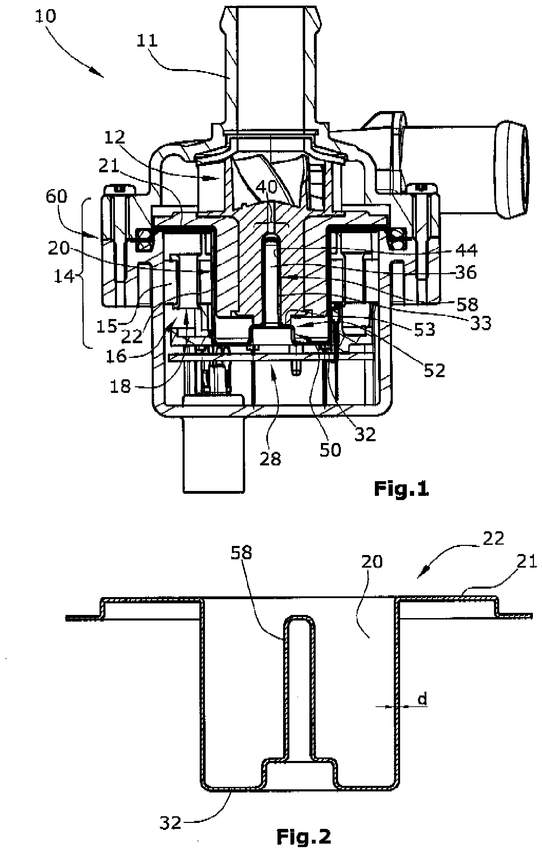

In der Figur 1 ist im Längsschnitt eine elektrische Kraftfahrzeug-Kühlmittelpumpe 10 dargestellt, die einen axialen Kühlmittel-Einlass 11 und einen tangentialen Kühlmittel-Auslass 13 aufweist. Die Kühlmittelpumpe 10 dient zum Pumpen eines flüssigen Kühlmittels, beispielsweise Wasser, in einem Kühl- oder Heizkreis, der ein Hauptkreis oder ein Nebenkreis sein kann.

Die Kühlmittelpumpe 10 weist einen Pumpenrotor 12 auf, der vorliegend als Flügelrad bzw. als sogenannter Impeller ausgebildet ist. Der Pumpenrotor 12 wird durch einen elektrischen Antriebsmotor 14 angetrieben, der durch eine elektronische Motorsteuerung 28 elektronisch kommutiert und angesteuert wird. Der Antriebsmotor 14 ist als bürstenloser Spaltrohr-Innenläufer ausgebildet, so dass ein ringförmiger Motorstator 16 koaxial um einen Motorrotor 18 herum angeordnet ist. Der Motorstator 16 wird von mehreren Motorspulen 15 gebildet. Der permanentmagnetisch erregte Motorrotor 18 ist drehfest mit dem Pumpenrotor 12 verbunden, wobei zwischen dem Motorrotor 18 und dem Pumpenrotor 12 eine Überlast-Kupplung vorgesehen sein kann, die bei einer Blockade des Pumpenrotors 12 öffnen kann.

Der Motorstator 16 ist in einem Trockenraum angeordnet, wohingegen der Motorrotor 18 in einem Nassraum angeordnet ist, der mit dem flüssigen Kühlmittel gefüllt ist. Der Nassraum und der Trockenraum sind durch einen rotationssymmetrischen Metallblechkörper 22 voneinander getrennt, der unter anderem ein zylindrisches Spaltrohr 20 in dem Ringspalt zwischen dem Motorstator 16 und dem Motorrotor 18 bildet. Im Bereich des zylindrischen Spaltrohrs 20 weist der Metallblechkörper 22 eine Materialstärke d = 0,3 mm auf.

Der Metallblechkörper 22 besteht aus einem austenitischen Edelstahl 1.4303 (X4CrNi18-12). Der Metallblechkörper 22 weist ungefähr eine relative magnetische Permeabilität µr = 1,0, eine Härte HV = 300 und einen spezifischen elektrischen Widerstand ρ =0,73 Ω × mm²/m auf.

Der Metallblechkörper 22 hat eine komplexe räumliche Form, die durch Tiefziehen ausgeformt ist, und hat mehrere Funktionen. Zum Einen dient der Metallblechkörper 22 der gas- und flüssigkeitsdichten Abschirmung des Trockenraumes von dem Flüssigkeitsraum. Ferner bildet der Metallblechkörper 22 eine Seite eines Motorrotor-Gleitlagers 40. Hierzu ist in dem topfförmigen Metallblechkörper 22 in der Mitte des Topfbodens 32 ein zylindrischer Lagerdorn 58 ausgebildet, dessen zylindrische Außenseite eine innere Gleitlagerschale 33 des Radial-Gleitlagers 40 für die radiale Lagerung des Motorrotors 18 bildet und eine Rauheit Rz von weniger als 3,5µm aufweist. Die äußere Gleitlagerschale 44 des Radial-Gleitlagers 40 besteht aus Kohlenstoff, vorzugsweise aus Graphit, und ist dem Motorrotor 18 drehfest zugeordnet. Das auf diese Weise gebildete Radial-Gleitlager 40 ist selbstschmierend ausgebildet. Der hohlzylindrische Lagerdorn 58 ist innenseitig vollständig ausgefüllt durch ein vollzylindrisches Wärmeleitelement 36 aus Kupfer. Das Wärmeleitelement 36 ist axial mindestens so lang wie der Lagerdorn 58 und sitzt mit Klemmsitz in dem Lagerdorn 58.

In der Mitte des ringförmigen Topfbodens 32 ist eine Ringstufe 50 vorgesehen, von der aus der Lagerdorn 58 unmittelbar axial emporragt. Die dem Motorrotor 18 axial zugewandte Ringfläche 53 der Ringstufe 50 bildet eine Anlauffläche eines Axial-Gleitlagers 52, durch das der Motorrotor 18 axial in eine Richtung gelagert bzw. abgestützt ist.

Der topfförmige Metallblechkörper 22 weist ferner einen ringscheibenförmigen und in einer Querebene stehenden Kragenring 21 auf, der in einer Querebene steht und radial nach außen von dem Spaltrohr 22 abragt. Der Außenumfang des Kragenrings 21 ist flüssigkeitsdicht an dem Kühlmittelpumpe-Gehäuse 60 fixiert.

## Patentansprüche

1. Elektrische Kraftfahrzeug-Kühlmittelpumpe (10) mit
einem Pumpenrotor (12) zum Pumpen des Kühlmittels und einem elektrischen Antriebsmotor (14) der den Pumpenrotor (12) antreibt, wobei der Antriebsmotor (14) aufweist
einen mehrere Motorspulen (15) aufweisenden trockenen Motorstator (16),
einen nassen Motorrotor (18), und
ein den Motorstator (16) und den Motorrotor (18) flüssigkeitsdicht voneinander trennendes Spaltrohr (20), wobei das Spaltrohr (20) von einem Metallblechkörper (22) gebildet wird, der
in dem Spaltbereich zwischen dem Motorrotor (18) und dem Motorstator (16) eine Materialstärke d < 0,5 mm aufweist,
aus einem austenitischen Edelstahl besteht,
eine Härte HV = 200 - 500 aufweist,
einen spezifischen elektrischen Widerstand ρ > 0,10 Ω × mm²/m aufweist, und
eine relative magnetische Permeabilität µm < 20, besonders bevorzugt µm < 1,5 aufweist,
wobei der einstückige Metallblechkörper (22) eine Gleitlagerschale (33) eines Radial-Gleitiagers (40) für die Radiallagerung des Motorrotors (18) bildet,
wobei der Metallblechkörper (22) eine Seite des Motorrotor-Gleitlagers (40) bildet, und
wobei in dem tropfförmigen Metallblechkörper (22) in der Mitte des Topfbodens (32) ein zylindrischer Lagerdorn (58) ausgebildet ist, dessen zylindrische Außenseite eine innere Gleitlagerschale (33) des Radial-Gleitlagers (40) für die radiale Lagerung des Motorrotors (18) bildet.

2. Elektrische Kraftfahrzeug-Kühlmittelpumpe (10) nach Anspruch 1 wobei mindestens in dem Bereich der Gleitlagerschale (33) die Rauheit Rz < 3,6µm des Metallblechkörpers (22) beträgt.

3. Elektrische Kraftfahrzeug-Kühlmittelpumpe (10) nach Anspruch 1 oder 2, wobei der Motorrotor (18) eine Gleitlagerschale (44) aus Kohlenstoff aufweist.

4. Elektrische Kraftfahrzeug-Kühlmittelpumpe (10) nach einem der vorangegangenen Ansprüche, wobei die Gleitlagerschale (33) des Metallblechkörpers (22) hohlzylindrisch ausgebildet ist, wobei der Hohlzylinderraum durch ein zylindrisches Wärmeleitelement (36) gefüllt ist, das bevorzugt metallisch ist, und besonders bevorzugt aus Kupfer besteht.

5. Elektrische Kraftfahrzeug-Kühlmittelpumpe (10) nach einem der vorangegangenen Ansprüche, wobei der Metallblechkörper (22) tiefgezogen Ist.

6. Elektrische Kraftfahrzeug-Kühlmittelpumpe (10) nach einem der vorangegangenen Ansprüche, wobei der topfförmige Metallblechkörper (22) zwischen dem Radial-Gleitlager (40) und einem in einer Querebene angeordneten Topfboden (32) eine Ringstufe (50) aufweist, die besonders bevorzugt als Axial-Gleitlager (52) ausgebildet ist.

7. Elektrische Kraftfahrzeug-Kühlmittelpumpe (10) nach einem der vorangegangenen Ansprüche, wobei der Antriebsmotor (14) als Innenläufer ausgebildet ist, so dass der Motorstator (16) radial außen des Motorrotors (18) angeordnet ist.

## Claims

1. Electric coolant pump (10) for a motor vehicle, comprising
a pump rotor (12) for pumping the coolant and an electric drive motor (14) driving the pump rotor (12), wherein the drive motor (14) comprises
a dry motor stator (16) comprising a plurality of motor coils (15),
a wet motor rotor (18), and
a can (20) separating the motor stator (16) and the motor rotor (18) in a fluid-tight manner, wherein the can (20) is defined by a sheet metal body (22) which
has a material thickness d < 0.5 mm in the gap region between the motor rotor (18) and the motor stator (16),
consists of an austenitic stainless steel
has a hardness HV = 200 - 500,
has a specific electric resistance ρ > 0.10 Ω × mm2/m, and
has a relative magnetic permeability µm < 20, more preferably µm < 1.5, wherein the one-piece sheet metal body (22) defines a friction bearing shell (33) of a radial friction bearing (40) for the radial bearing of the motor rotor (18),
said metal sheet body (22) defining one side of the motor rotor friction bearing (40), and
wherein a cylindrical bearing mandrel (58) is configured in the cup-shaped sheet metal body (22) in the centre of the cup bottom (32), the cylindrical outer side of the cylindrical bearing mandrel (58) configuring an inner friction bearing shell (33) of the motor rotor friction bearing (40) for the radial bearing of the motor rotor (18).

2. Electric coolant pump (10) for a motor vehicle according to Claim 1, wherein at least in the region of the friction bearing shell (33) the roughness Rz of the sheet metal body (22) is < 3.6 µm.

3. Electric coolant pump (10) for a motor vehicle according to claim 1 or 2, wherein the motor rotor (18) comprises a friction bearing shell (44) made of carbon.

4. Electric coolant pump (10) for a motor vehicle according to any one of the preceding claims, wherein the friction bearing shell (33) of the sheet metal body (22) is configured to be hollow cylindrical, wherein the hollow cylindrical space is filled by a cylindrical heat conducting element (36), which is preferably metallic, and more preferably made of copper.

5. Electric coolant pump (10) for a motor vehicle according to any one of the preceding claims, wherein the sheet metal body (22) is deep-drawn.

6. Electric coolant pump (10) for a motor vehicle according to any one of the preceding claims, wherein the pot-shaped sheet metal body (22) comprises, between the radial slide bearing (40) and a cup bottom (32) arranged in a transverse plane, an annular step (50) which is configured more preferably as an axial slide bearing (52).

7. Electric coolant pump (10) for a motor vehicle according to one of the preceding claims, wherein the drive motor (14) is configured with an internal rotor, so that the motor stator (16) is arranged radially outside the motor rotor (18).

## Revendications

1. Pompe électrique de refroidissement (10) pour un véhicule à moteur, qui comprend
un rotor de pompe (12) pour pomper le liquide de refroidissement et un moteur d'entraînement électrique (14) entraînant le rotor de pompe (12), dans lequel le moteur d'entraînement (14) comprend
un stator de moteur sec (16) comprenant une pluralité de bobines de moteur (15),
un rotor de moteur humide (18), et
une boîte (20) séparant le stator de moteur (16) et le rotor de moteur (18) de manière étanche aux fluides, dans laquelle la boîte (20) est définie par un corps en tôle (22) qui
a une épaisseur de matériau d < 0,5 mm dans la zone de l'interstice entre le rotor du moteur (18) et le stator du moteur (16),
est constitué d'un acier inoxydable austénitique
est d'une dureté HV = 200 - 500,
a une résistance électrique spécifique ρ > 0,10 Ω × mm2/m, et
est d'une perméabilité magnétique relative µm < 20, plus préférablement µm < 1,5,
dans lequel le corps en tôle d'une seule pièce (22) définit une coquille de palier de friction (33) d'un palier de friction radial (40) pour le palier radial du rotor du moteur (18),
ledit corps en tôle métallique (22) définit un côté du palier à friction du rotor du moteur (40), et
dans lequel un mandrin de palier cylindrique (58) est configuré dans le corps en tôle en forme de coupe (22) au centre du fond de coupe (32), le côté extérieur cylindrique du mandrin de palier cylindrique (58) forme une coquille de palier de friction intérieure (33) du palier de friction de rotor de moteur (40) pour le palier radial du rotor de moteur (18).

2. Pompe électrique de refroidissement (10) pour un véhicule automobile selon la revendication 1, dans laquelle, au moins dans la zone de la coquille de palier à friction (33), la rugosité Rz du corps en tôle (22) est < 3,6 µm.

3. Pompe électrique de refroidissement (10) pour un véhicule automobile selon la revendication 1 ou 2, dans laquelle le rotor du moteur (18) comprend une coquille de palier à friction (44) en carbone.

4. Pompe électrique de refroidissement (10) pour un véhicule automobile selon l'une quelconque des revendications précédentes, dans laquelle la coquille de palier de friction (33) du corps en tôle (22) est configurée pour être cylindrique creuse, dans laquelle l'espace cylindrique creux est rempli par un élément conducteur de chaleur cylindrique (36), qui est de préférence métallique, et plus préférablement en cuivre.

5. Pompe électrique de refroidissement (10) pour véhicule automobile selon l'une quelconque des revendications précédentes, dans laquelle le corps en tôle (22) est embouti.

6. Pompe électrique de refroidissement (10) pour véhicule automobile selon l'une quelconque des revendications précédentes, dans laquelle le corps en tôle (22) en forme de pot comprend, entre le palier lisse radial (40) et un fond de cuvette (32) disposé dans un plan transversal, une marche annulaire (50) configurée plus préférentiellement en palier lisse axial (52).

7. Pompe électrique de refroidissement (10) pour véhicule automobile selon l'une des revendications précédentes, dans laquelle le moteur d'entraînement (14) est configuré avec un rotor interne, de sorte que le stator du moteur (16) est disposé radialement à l'extérieur du rotor du moteur (18).
